# EUROPÄISCHE PATENTSCHRIFT

(11) **EP 0 814 725 B1**
(45) Veröffentlichungstag und Bekanntmachung des Hinweises auf die Patenterteilung: **24.02.1999**
(21) Anmeldenummer: 96907456.6
(22) Anmeldetag: 14.03.1996
(51) Int. Cl.: A61C 8/00

(54) **ZAHNIMPLANTATANORDNUNG**
TOOTH IMPLANT ARRANGEMENT
ENSEMBLE IMPLANT DENTAIRE

(30) Priorität: 17.03.1995 DE 19509118
(43) Veröffentlichungstag der Anmeldung: 07.01.1998
(73) Patentinhaber: Hanel, Michael, 70771 Leinfelden-Echterdingen (DE)
(72) Erfinder: Hanel, Michael, 70771 Leinfelden-Echterdingen (DE)
(74) Vertreter: Fuhlendorf, Jörn, Dipl.-Ing.
(86) Internationale Anmeldenummer: EP9601076
(87) Internationale Veröffentlichungsnummer: WO9629022

(56) Entgegenhaltungen:
- EP-A- 0 288 702
- WO-A-90/04951
- DE-A- 3 300 746
- DE-A- 3 413 811
- US-A- 4 907 969

## Beschreibung

Die vorliegende Erfindung bezieht sich auf eine Zahnimplantatanordnung nach dem Oberbegriff des Anspruchs 1.

Bei einer bekannten Zahnimplantatanordnung, wie sie bspw. durch das sog. Ha-Ti-Implantat-System bekannt ist, ist der Aufbaukörper mit dem starr in den Unter- oder Oberkiefer implantierten Implantatkörper über ein als Schraube ausgebildetes bolzenartigen Halteelementes ebenfalls starr in der Weise verbunden, daß der Aufbaukörper mit seinem inneren Ende in eine entsprechende Bohrung des Implantatkörpers eingesetzt und die in dem Aufbaukörper versenkte Befestigungsschraube fest angezogen ist. Da auch das daran befestigte Brückenteil oder Kronenersatz o.dgl. mit Hilfe einer Fixierschraube am Aufbaukörper festgehalten ist, ist die gesamte Zahnimplantatanordnung im Unter- bzw. Oberkiefer sozusagen unverrückbar gehalten. Dies steht im Gegensatz zu den natürlichen Zähnen, die zumindest eine gewisse axiale elastische Bewegung innerhalb des Kiefers ausführen können. Darüberhinaus sind die Schneidezähne zusätzlich auch in sagittaler Richtung in gewissen Grenzen elastisch innerhalb des Kiefers bewegbar. Diese starre Halterung der bekannten Zahnimplantatanordnung im Kieferknochen führt u.a. dazu, daß Personen, die an Bruxismus leiden, d.h. insbesondere nachts mit den Zähnen knirschen, nicht mit einer derartigen Zahnimplantatanordnung versorgt werden können. Die starre im Kieferknochen sozusagen fest zementierte, bekannte Zahnimplantatanordnung kann darüberhinaus auch bei nicht zum Zähneknirschen neigenden Personen zu Schäden, insbesondere am Brückenteil, Kronenersatz o.dgl. führen.

Aus der DE-C-34 13 811 ist eine im wesentlichen die Merkmale des Oberbegriffs des Anspruchs 1 aufweisende Kronen-Befestigungsvorrichtung für ein in einen Kiefer einzusetzendes Implantat bekannt, bei der mit dem Implantatkörper ein Kupplungsstück fest verschraubt ist, auf dessen spreizbarem tonnenförmigem Kopf ein Kronenverbindungsstück aufgesteckt ist, das sich ringstirnseitig über einen elastischen Ring am Kupplungsstück abstützt. Diese Anordnung gestattet zwar eine Beweglichkeit zwischen Krone und Implantatkörper, jedoch ist diese weder definierbar noch reproduzierbar. Da auch keine Rotationssicherung vorgesehen ist, ergibt sich eine unkontrollierbare dreidimensionale Beweglichkeit des Kronenverbindungsstückes. Eine mit einem natürlich Zahn vergleichbare Beweglichkeit ist somit nicht gegeben, zumal sich eine Bewegung generell durch Belastung und nicht hauptsächlich erst durch eine Fehl- oder Überbelastung ergibt. Bei der bekannten Anordnung ergibt sich nicht nur eine geringe Primärstabilität, sondern auch eine unrealistische Bauhöhe insbesondere aufgrund des Kupplungsstückes.

Aufgabe der vorliegenden Erfindung ist es deshalb, eine Zahnimplantatanordnung der eingangs genannten Art zu schaffen, die eine mit einem natürlichen Zahn vergleichbare Beweglichkeit im Kiefer bzw. Kieferknochen bzw. einen einfachen Aufbau besitzt.

Zur Lösung dieser Aufgabe sind bei einer Zahnimplantatanordnung der eingangs genannten Art die im Anspruch 1 angegebenen Merkmale vorgesehen.

Durch die erfindungsgemäßen Maßnahmen ist der Zahnimplantatanordnung bei optimaler Primärstabilität eine ähnliche Beweglichkeit innerhalb des Unter- oder Oberkiefers verliehen, wie sie bei den natürlichen Zähnen gegeben ist. Damit ist eine derartige Zahnimplantatanordnung in vielfältigerer Weise einsetzbar und in sehr geringem Maße Abnutzungen und möglichen Beschädigungen unterworfen.

Bei einer vorteilhaften Ausgestaltung des Halteelements sind die Merkmale nach Anspruch 2 vorgesehen.

Gemäß einer weiteren Ausgestaltung vorliegender Erfindung sind die Merkmale gemäß Anspruch 3 vorgesehen, was bedeutet, daß zur Kompensation der auftretenden axialen und/oder sagittalen Krafteinwirkung die möglichen bzw. zulässigen Bewegungswege der Zahnimplantatanordnung gegenüber dem Kiefer einstellbar gemacht werden können. Mit anderen Worten, es kann die elastische Beweglichkeit der Zahnimplantatanordnung patientengerecht vorgegeben werden.

Eine bevorzugte Ausführungsform hinsichtlich der konstruktiven Ausgestaltung der relativen Beweglichkeit zwischen Aufbaukörper und Implantatkörper ergibt sich aus den Merkmalen des Anspruchs 4, wobei sich Ausgestaltungen hierzu aus den Merkmalen des Anspruchs 5 ergeben. Hierbei ist in einfacher Weise die Möglichkeit der Einstellung der Größe der Auslenkung bzw. Beweglichkeit vorgegeben.

Zweckmäßigerweise sind zur geeigneten Beweglichkeit des Aufbaukörpers gegenüber dem Implantatkörper die Merkmale gemäß Anspruch 6 vorgesehen.

Um eine Bewegung des Aufbaukörpers gegenüber dem Implantatkörper in nur einer Schwenkrichtung zu gewährleisten, sind die Merkmale gemäß Anspruch 7 vorgesehen. Damit ist sowohl eine Rotation als auch eine seitliche Beweglichkeit eines Zahnes der Zahnimplantatanordnung um seine Achse bzw. relativ zu benachbarten natürlichen oder künstlichen Zähnen verhindert. Dabei ist es zweckmäßig, die Merkmale nach Anspruch 8 vorzusehen.

Mit den Merkmalen gemäß Anspruch 9 und/oder 10 ist eine sichere Fixierung einer Brennkappe, eines Kronenersatzes o.dgl. am Aufbaukörper gewährleistet. Sind die Merkmale gemäß Anspruch 11 vorgesehen, so ist auch eine Abdichtung von außen nach innen gegeben.

Mit den Merkmalen gemäß Anspruch 12 und/oder 13 ist es möglich, die Brennkappe nicht in jedem Einzelfall gesondert herstellen zu müssen.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: einen parallel zur Frontalseite angeordneten Längsschnitt durch eine Zahnimplantatanordnung gemäß einem ersten Ausführungsbeispiel vorliegender Erfindung,
- Figur 2: einen zur Schnittebene der Figur 1 um 90° gedrehten Längsschnitt durch die Zahnimplantatanordnung der Figur 1 und
- Figur 3: einen der Figur 2 entsprechenden Längsschnitt durch eine Zahnimplantatanordnung gemäß einem zweiten Ausführungsbeispiel vorliegender Erfindung.

Die in der Zeichnung dargestellte Zahnimplantatanordnung 10 bzw. 10' ist derart aufgebaut, daß sie eine in ihrer Schwergängigkeit und in den möglichen Wegen einstellbare relative Beweglichkeit des künstlichen Zahns in Richtung der Pfeile A und/oder B gegenüber dem im Kiefer bzw. im Kieferknochen ortsfest verankerten Teil der Zahnimplantatanordnung zur Kompensation der auftretenden axialen und/oder sagittalen Krafteinwirkung gewährt.

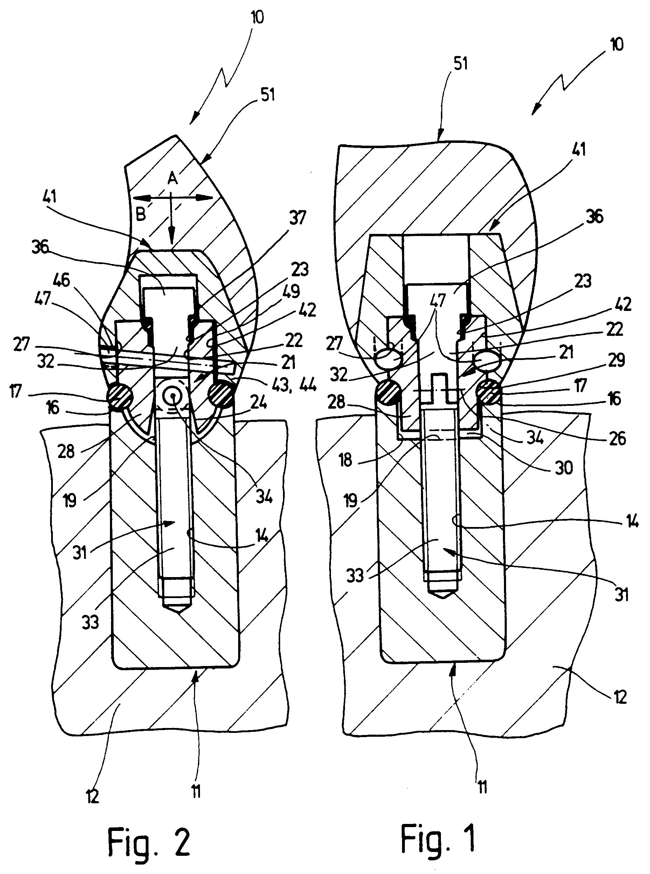

Gemäß den Figuren 1 und 2 besitzt die Zahnimplantatanordnung 10 einen Implantatkörper 11, der in einen angedeuteten Knochen 12 eines Unter- oder Oberkiefers implantiert ist. Das Implantieren des Implantatkörpers 11 ist in vielfältig bekannter Weise möglich, bspw. dadurch, daß der Implantatkörper 11 ein nicht dargestelltes Außengewinde aufweist, mit dessen Hilfe er in eine entsprechend vorgebohrte Sacklochbohrung im betreffenden Kieferknochen einschraubbar ist. Darüberhinaus besitzt der Implantatkörper 11 eine konzentrische Innengewindebohrung 14. Außenumfangsseitig kann der Implantatkörper 11 entsprechend zylindrisch oder leicht konisch geformt sein. Wie noch zu zeigen sein wird, besitzt der Implantatkörper 11 an seinem aus dem Kieferknochen 12 herausragende Ende stirnseitig eine Ringkehle 16 zur Aufnahme eines elastischen Lagerringes 17. Konzentrisch zur Ringkehle 16 ist der Implantatkörper 11 mit einer schlitzartigen Ausnehmung 18 versehen, deren Grund 19 halbzylindrisch ausgebildet ist.

Auf dem aus dem Kieferknochen 12 herausragenden oberen Ende des Implantatkörpers 11 ist ein hohl ausgebildeter Aufbaukörper 21 aufgesetzt, dessen zylindrische Durchgangsbohrung 22 an ihrer Oberseite von einer durchmesserbreiteren Ringausnehmung 23 ausgeht und an ihrer Unterseite in eine sich in einer Ebene konisch verbreiternde Ausnehmung 24 übergeht. Der Aufbaukörper 21 besitzt im wesentlichen eine Zylinderform, deren dem Implantatkörper 11 abgewandte Stirn eben und deren dem Implantatkörper 11 zugewandtes Endteil halbzylindrisch mit parallelen ebenen Seitenbereichen 26 ausgebildet ist. Zwischen dem axial zylindrischen Teil 27 und dem in Querrichtung halbzylindrischen Endteil 28 ist eine im Querschnitt kehlenartige Umfangsnut 29 ausgebildet, in der der elastische Lagerring 17 gehalten ist.

Mit seinem unteren halbzylindrischen Endteil 28 ist der Aufbaukörper 21 in die entsprechend geformte Ausnehmung 18 des Implantatkörpers 11 eingesetzt und derart gehalten, daß zwischen dem halbzylindrischen Endteil 28 des Aufbaukörpers 21 und der Ausnehmung 18 des Implantatkörpers 11 seitlich kein Spiel, jedoch in axialer Richtung ein ausreichender Spalt 30 besteht.

Der Aufbaukörper 21 ist mit Hilfe einer Gelenkschraube 31 am Implantatkörper 11 befestigt. Die Gelenkschraube 31 besitzt einen in die Durchgangsbohrung 22 des Aufbaukörpers 21 eingesteckten oberen Teil 32 und einen in den Implantatkörper 11 einschraubbaren unteren Außengewindeteil 33, welche beiden Teile 32 und 33 über einen Achsstift 34 gelenkig miteinander verbunden sind. Die beiden jeweils zylindrischen Teile 32 und 33 greifen an ihren einander zugewandten und vom Achsstift 34 durchdrungenen abgerundeten Enden nach Art einer Nut-Steg-Verbindung ineinander, wie dies aus Figur 1 ersichtlich ist. Auf diese Weise können die beiden Teile 32 und 33 in einer bestimmten Ebene relativ zueinander verschwenkt werden. Der obere Teil 32 besitzt einen Schraubenkopf 36, der in der Ringausnehmung 23 des Aufbaukörpers 21 teilweise versenkt angeordnet und beim Ausführungsbeispiel über einen O-Ring 37 abgedichtet ist. Der Kopf 36 besitzt einen Schlitz o.dgl. zum Ansetzen eines Drehwerkzeugs. Die Gelenkschraube 31 zur Befestigung des Aufbaukörpers 21 am Implantatkörper 11 wird derart in die Innengewindebohrung 14 des Implantatkörpers 11 eingeschraubt, daß der Achsstift 34 parallel zur Achse des halbzylindrischen Grundes 19 der Ausnehmung 18 bzw. parallel zur Frontalseite des Aufbaukörpers 21 angeordnet ist, so daß eine Bewegung des Aufbaukörpers 21 relativ zum Implantatkörper 11 in sagittaler Richtung bzw. in Richtung des Mundraumes, jedenfalls nicht zu den benachbarten Zähnen hin, möglich ist. Diese sagittale Beweglichkeit des Aufbaukörpers 21 ist rückfedernd elastisch, da sich der Aufbaukörper 21 über den elastischen Lagerring 17 an der Stirnseite des Implantatkörpers 11 abstützt.

Je nach dem beim Befestigen des Aufbaukörpers 21 am Implantatkörper 11 auf die Gelenkschraube 31 aufgewendeten Anzugsmoment wird der elastische Lagerring 17 mehr oder weniger komprimiert und damit eine mehr oder weniger große Vorspannung des elastischen Lagerrings 17 erreicht. Dies bedeutet, daß in Abhängigkeit von der Größe der Vorspannung einerseits die zur Auslenkung des Aufbaukörpers 21 gegenüber dem Implantatkörper 11 aufzuwendende Kraft veränderbar und andererseits die Größe der Beweglichkeit, d.h. der Auslenkungsgrad des Aufbaukörpers 21 gegenüber dem Implantatkörper 11 einstellbar ist. Aus diesem Grunde muß auch der genannte Spalt 30 in axialer Richtung ausreichend groß bemessen sein. Der Achsstift 34 soll etwa derart angeordnet sein, daß seine Mittelachse gleich der Zylinderachse sowohl des halbzylindrischen Teils 28 des Aufbaukörpers 21 als auch der kreisförmigen Grundfläche 19 der Ausnehmung 18 des Implantatkörpers 11 ist. Bevorzugt ist die Lage des Achsstiftes 34 etwa in Höhe der hohlkehlenartigen Umfangsnut 29 am Aufbaukörper 21. Durch die in einer Ebene konische Ausnehmung 24 im Verlauf der Durchgangsbohrung 22 im Bereich jenseits des Achsstiftes 34 und dem Implantantkörper 11 zugewandt ist die Beweglichkeit des Aufbaukörpers 21 in Richtung des Mundraumes und gegengerichtet gegenüber dem unteren Teil 33 der Gelenkschraube 31 gewährleistet, wie dies aus Figur 2 ersichtlich ist.

Beim dargestellten Ausführungsbeispiel sind der Implantatkörper 11 und der Aufbaukörper 21 aus Aluminiumoxidkeramik hergestellt. Es versteht sich, daß der eine und/oder andere Körper 11, 21 auch aus anderen bei der Zahnimplantation verwendeten Materialien, wie bspw. einem titanbeschichteten Verbundwerkstoff sein kann. Entsprechendes gilt für die Gelenkschraube 31. Der elastische Lagerring 17 ist aus einem hygienisch einwandfreien elastischen Kunststoffmaterial, wie bspw. Silikon.

Über den Aufbaukörper 21 und den oberen Bereich der Gelenkschraube 31 ist eine Brennkappe 41 gesetzt, die wie der Implantatkörper 11, der Aufbaukörper 21 und die Gelenkschraube 31 für bestimmte Zahntypen vorgefertigt sein kann. Die Brennkappe 41, die außenumfangsseitig zumindest teilweise zahnkronenartig ausgebildet ist, besitzt von ihrer Innenseite her eine zentrische, gestufte Sacklochausnehmung 42, in die der Kopf 36 der Gelenkschraube 31 und der zylindrische Teil 27 des Aufbaukörpers 21 aufgenommen sind. Der dem Implantatkörper 11 zugewandte Stirnrand 43 der Brennkappe 41 liegt mit seiner Ringkehle 44 auf dem elastischen Lagerring 17 auf. Von der oralen Seite her sind die Brennkappe 41 und der Aufbaukörper 21 mit zwei parallelen schräg einwärts gerichteten Bohrungen 46 versehen, die nur im oralen Bereich der Brennkappe 41 einen Gewindeabschnitt aufweisen und in die zum Fixieren der Brennkappe 41 am Aufbaukörper 21 zwei parallele, mit einem Gewindeabschnitt versehene Transversalstifte 47 einsetzbar bzw. einschraubbar sind. Die beiden Bohrungen 46 sind Sacklochbohrungen, die im frontalen Bereich der Brennkappe 41 enden, in einem radialen Abstand von der Gelenkschraube 31 liegen und im Bereich des Aufbaukörpers 21 sich sowohl in diesem als auch in der Brennkappe 41 befinden. Die Brennkappe 41, die bspw. aus Aluminiumoxidkeramik ist, ist über eine frontale, axial verlaufende Nut/Feder-Verbindung 49 lagerichtig auf den Aufbaukörper 21 aufsetzbar. Bei der Montage wird durch Druck auf die Brennkappe 41 gegen den elastischen Lagerring 17 erreicht, daß die einzelnen Bohrungsteile der Bohrungen 46 zum einfachen oralen Einsetzen des Stiftes 47 miteinander fluchten.

Auf die vorgefertigte Brennkappe 41 ist eine patientenspezifisch angefertigte Zahnverblendung 51 vorgesehen, die durch Aufbrennen befestigt ist. Beim dargestellten Ausführungsbeispiel weist die Zahnverblendung 51 die Form eines frontalen Schneidezahns auf.

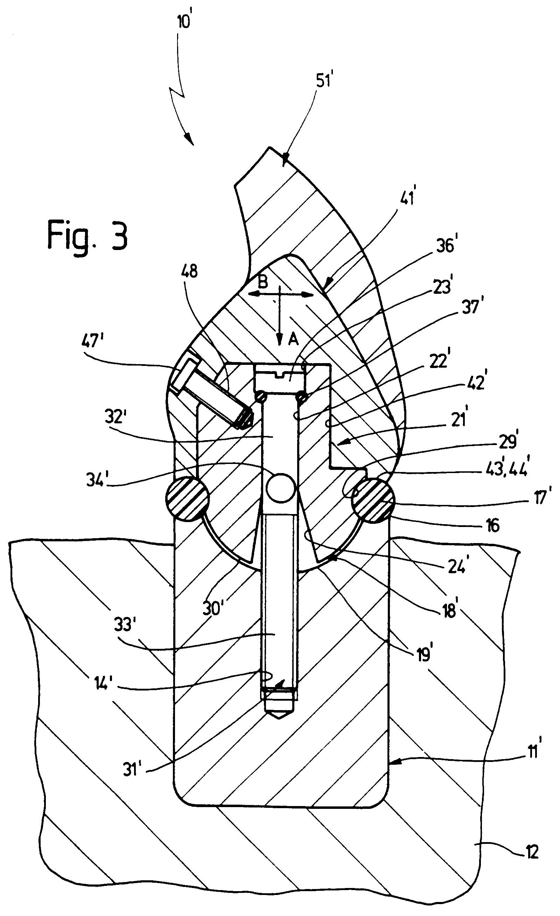

Die in Figur 3 dargestellte Zahnimplantatanordnung 10' ist im Grundsatz in derselben Weise wie die Zahnimplantatanordnung 10 aufgebaut, so daß die einzelnen Bauteile, ohne daß sie gesondert erwähnt sind, in der Darstellung der Figur 3 mit denselben, jedoch mit einem Strich versehenen Bezugsziffern bezeichnet sind. Ein Unterschied der Zahnimplantatanordnung 10' gegenüber der Zahnimplantatanordnung 10 liegt im wesentlichen in der Ausführung des Aufbaukörpers 21, der auf Kosten der Brennkappe 41 insgesamt großvolumiger und asymmetrisch ausgebildet ist, wobei der Kopf 36' der Gelenkschraube 31' insgesamt im Aufbaukörper 21 versenkt ist. Desweiteren ist im Aufbaukörper 21' eine Gewindebohrung 48' in axialer Flucht mit der in der Brennkappe 41' vorgesehenen Durchgangsbohrung 46' zur Aufnahme einer einzigen Transversalschraube 47', deren Kopf in der Brennkappe 41' vollständig versenkt angeordnet ist, vorgesehen. Außerdem ist beim Aufbaukörper 21' der untere Teil 28' halbkugelförmig mit abgeflachten, parallelen gegenüberliegenden Seiten ausgebildet. Entsprechendes gilt für die Form der Ausnehmung 18' des Implantatkörpers 11'.

Es versteht sich, daß die Brennkappe 41 bzw. 41' statt einer Zahnverblendung für einen künstlichen Einzelzahn auch bei mehreren nebeneinanderliegenden Implantatanordnungen den Teil einer Brücke oder eine Krone o.dgl. aufnehmen kann.

## Patentansprüche

1. Zahnimplantatanordnung (10), mit einem in den Kiefer einsetzbaren Implantatkörper (11) und mit einem mittels eines bolzenartigen Halteelementes (31) am Implantatkörper (11) vorzugsweise lösbar gehaltenen Aufbaukörper (21), der gegenüber dem Implantatkörper (11) mit Hilfe eines elastischen Ringes (17) in axialer und sagittaler Richtung elastisch bewegbar gelagert ist und auf den eine Brennkappe (41), ein Brückenteil, ein Kronenersatz o.dgl. setzbar und fixierbar ist, **dadurch gekennzeichnet**, daß das bolzenartige Halteelement (31) zwischen Aufbaukörper (21) und Implantatkörper (11) durch zwei über eine Schwenkachse (34) miteinander verbundene Bolzenteile (32, 33) gebildet ist.

2. Zahnimplantatanordnung nach Anspruch 1, dadurch gekennzeichnet, daß der im Aufbaukörper (21) angeordnete im wesentlichen durchdringende Bolzenteil (32) mit einem Schraubenkopf (36) und der andere über einen bestimmten Längenbereich im Implantatkörper (11) gehaltene Bolzenteil (33) mit einem Außengewinde versehen ist.

3. Zahnimplantatanordnung nach Anspruch 1 oder 2, dadurch gekennzeichnet, daß die federnd elastische Beweglichkeit des Aufbaukörpers (21) relativ zum Implantatkörper (11) einstellbar ist.

4. Zahnimplantatanordnung nach mindestens einem der vorhergehenden Ansprüche, dadurch gekennzeichnet, daß der elastische Ring (17), vorzugsweise als ein O-förmiger Lagerring, auf einer axiale Stirnfläche des Aufbaukörpers (21) und an einer Umfangsringfläche des Implantatkörpers (11) angeordnet ist.

5. Zahnimplantatanordnung nach den Ansprüchen 1 und 4, dadurch gekennzeichnet, daß sich auf dem elastischen Ring (17) dem Implantatkörper (11) etwa gegenüberliegend die Brennkappe (41) o.dgl. abstützt.

6. Zahnimplantatanordnung nach einem der vorhergehenden Ansprüche, dadurch gekennzeichnet, daß die Schwenkachse (34) des Halteelementes (31) etwa in Höhe des elastischen Ringes (17) innerhalb des Aufbaukörpers (21) angeordnet ist.

7. Zahnimplantatanordnung nach mindestens einem der vorhergehenden Ansprüche, dadurch gekennzeichnet, daß der Aufbaukörper (21) an seinem in den Implantatkörper (11) greifenden Ende (28) kugelkalottenförmig mit gegenüberliegenden abgeflachten Seitenbereichen (26) ausgebildet ist.

8. Zahnimplantatanordnung nach Anspruch 7, dadurch gekennzeichnet, daß zwischen der Kugelkalottenfläche des Endteils (28) des Aufbaukörpers (21) und derjenigen einer Ausnehmung (18) im Implantatkörper (11) ein Spalt (30) vorgesehen ist.

9. Zahnimplantatanordnung nach mindestens einem der vorhergehenden Ansprüche, dadurch gekennzeichnet, daß die Brennkappe (41), der Kronenersatz o.dgl. mittels mindestens einem oral eingebrachten Fixierstift (47) am Aufbaukörper (21) gehalten ist.

10. Zahnimplantatanordnung nach Anspruch 9, dadurch gekennzeichnet, daß zwei parallele, mit einem Gewindeabschnitt versehene Fixierstife (47) in Sacklochbohrungen, die den Aufbaukörper zumindest teilweise durchdringen, eingebracht sind.

11. Zahnimplantatanordnung nach den Ansprüchen 5 und 9, dadurch gekennzeichnet, daß die Brennkappe (41) auf dem elastischen Ring (17) axial vorgespannt aufsitzt.

12. Zahnimplantatanordnung nach mindestens einem der vorhergehenden Ansprüche, dadurch gekennzeichnet, daß die Brennkappe (41) mit einer Zahnverblendung (51) bestückt ist.

13. Zahnimplantatanordnung nach Anspruch 12, dadurch gekennzeichnet, daß die Brennkappe (41) ein vorgefertigtes Bauteil ist.

## Claims

1. A tooth implant arrangement (10) with an implant body (11), which can be inserted in the jaw, and with a structural body (21), which is held, preferably releasably, on the implant body (11) by means of a bolt-like holding element (31), and which is seated elastically movable in the axial and sagittal direction in respect to the implant body (11) with the aid of an elastic seating ring (17), and on which a firing cap (41), a bridge element, a crown replacement or the like can be put and fixed in place, characterized in that the bolt-like holding element (31) between the structural body (21) and the implant body (11) is constituted by two bolt parts (32, 33), which are connected via a pivot shaft (34) with each other.

2. The tooth implant arrangement in accordance with claim 1, characterized in that the bolt part (32) disposed in the structural body (21) and essentially penetrating it is provided with a screw head (36), and the other bolt part (33), which is maintained over a defined longitudinal area in the implant body (11), is provided with an exterior thread.

3. The tooth implant arrangement in accordance with claim 1 or 2, characterized in that the spring-elastic mobility of the structural body (21) can be adjusted in relation to the implant body (11).

4. The tooth implant arrangement in accordance with at least one of the preceding claims, characterized in that the elastic ring (17), preferably in the form of an O-shaped seating ring, is disposed on an axial front face of the structural body (21) and on a circumferential surface of the implant body (11).

5. The tooth implant arrangement in accordance with claims 1 and 4, characterized in that the firing cap (41) or the like is supported on the elastic ring (17), located approximately opposite the implant body (11).

6. The tooth implant arrangement in accordance with one of the preceding claims, characterized in that the pivot shaft (34) of the holding element (31) is arranged approximately at the level of the elastic ring (17) inside the structural body (21).

7. The tooth implant arrangement in accordance with at least one of the preceding claims, characterized in that on its end (28) extending into the implant body (11), the structural body (21) is embodied in the shape of a universal ball joint with oppositely located flattened side areas (26).

8. The tooth implant arrangement in accordance with claim 7, characterized in that a gap (30) is provided between the universal ball joint surface of the end part (28) of the structural body (21) and that of a recess (18) in the implant body (11).

9. The tooth implant arrangement in accordance with at least one of the preceding claims, characterized in that the firing cap (41), the crown replacement or the like are held on the structural body (21) by means of at least one orally inserted fixation pin (47).

10. The tooth implant arrangement in accordance with claim 9, characterized in that two parallel fixation pins (47), which are provided with threaded sections, have been inserted into blind bores which at least partially penetrate the structural body.

11. The tooth implant arrangement in accordance with claims 5 and 9, characterized in that the firing cap (41) is seated with axial prestress on the axial ring (17).

12. The tooth implant arrangement in accordance with at least one of the preceding claims, characterized in that the firing cap (41) is equipped with a tooth veneer (51).

13. The tooth implant arrangement in accordance with claim 12, characterized in that the firing cap (41) is a prefabricated component.

## Revendications

1. Structure d'implant dentaire (10) avec un corps d'implant (11) implantable dans la mâchoire, avec une superstructure (21), retenue de préférence de façon amovible au corps d'implant (11) au moyen d'un élément de retenue (31) de type bouton, qui est logée de façon élastique et mobile en direction axiale et sagittale par rapport au corps d'implant (11) à l'aide d'une bague élastique (17), et sur laquelle on peut placer et fixer une coiffe (41), une partie de bridge, une fausse couronne ou similaire, caractérisée en ce que l'élément de retenue (31) de type bouton entre la superstructure (21) et le corps d'implant (11) est constitué de deux parties de bouton (32, 33) reliées ensemble par un axe de pivotement (34).

2. Structure d'implant dentaire selon la revendication 1, caractérisée en ce que ta partie de bouton (32), substantiellement traversante, disposée dans la superstructure (21), est munie d'une tête de vis (36) et en ce que l'autre partie de bouton (33), retenue sur une certaine portion de longueur dans te corps d'implant (11), est munie d'un filetage extérieur.

3. Structure d'implant dentaire selon la revendication 1 ou 2, caractérisée en ce que la mobilité à ressort élastique de la superstructure (21) est réglable par rapport au corps d'implant (11).

4. Structure d'implant dentaire selon l'une au moins des revendications précédentes, caractérisée en ce que la bague élastique (17), de préférence sous forme d'un O-ring de support, est disposée sur une face frontale axiale de la superstructure (21) et contre une surface de contour annulaire du corps d'implantat (11).

5. Structure d'implant dentaire selon les revendications 1 et 4, caractérisée en ce que la coiffe (41) ou similaire repose sur l'anneau élastique (17) à peu près face au corps d'implant (11).

6. Structure d'implant dentaire selon l'une des revendications précédentes caractérisée en ce que l'axe de pivotement (34) de l'élément de retenue (31) est disposé environ à la hauteur de l'anneau élastique (17) à l'intérieur de la superstructure (21).

7. Structure d'implant dentaire selon l'une au moins des revendications précédentes, caractérisée en ce que la superstructure (21) présente la forme d'une calotte sphérique avec des zones latérales (26) opposées aplaties à son extrémité (28) en prise avec le corps d'implant (11).

8. Structure d'implant dentaire selon la revendication 7, caractérisée en ce qu'un espace (30) est prévu entre la surface de la calotte sphérique de l'extrémité (28) de la superstructure (21) et ta surface d'un creux (18) dans le corps d'implant (11).

9. Structure d'implant dentaire selon l'une au moins des revendications précédentes, caractérisée en ce que la coiffe (41), la fausse couronne ou similaire sont retenues à la superstructure (21) au moyen d'au moins une tige de fixation (47) placée oralement.

10. Structure d'implant dentaire selon la revendication 9, caractérisée en ce que deux tiges de fixation (47) parallèles, avec une portion filetée, sont placées dans des trous borgnes qui traversent la superstructure au moins partiellement.

11. Structure d'implant dentaire selon les revendications 5 et 9, caractérisée en ce que la coiffe (41) repose sous prétension axiale sur l'anneau élastique (17).

12. Structure d'implant dentaire selon au moins l'une des revendications précédentes, caractérisée en ce que la coiffe (41) est munie d'une revètement (51).

13. Structure d'implant dentaire selon la revendication (12), caractérisée en ce que la coiffe (41) est une pièce préformée.
